# EUROPÄISCHE PATENTSCHRIFT

(11) **EP 0 490 984 B1**
(45) Veröffentlichungstag und Bekanntmachung des Hinweises auf die Patenterteilung: **03.11.1993**
(21) Anmeldenummer: 90914156.6
(22) Anmeldetag: 31.08.1990
(51) Int. Cl.: B23K 26/00

(54) **STANZ-RILLPLATTE**
SLOTTED PUNCHING PLATE
PLAQUE CANNELEE D'ESTAMPAGE

(30) Priorität: 05.09.1989 DE 3929415
(43) Veröffentlichungstag der Anmeldung: 24.06.1992
(73) Patentinhaber: Karl Marbach GmbH + Co., D-74080 Heilbronn (DE)
(72) Erfinder: STRACK, Franz, D-7100 Heilbronn (DE)
(74) Vertreter: Dreiss, Fuhlendorf, Steimle & Becker, Patentanwälte
(86) Internationale Anmeldenummer: EP9001454
(87) Internationale Veröffentlichungsnummer: WO9103352

(56) Entgegenhaltungen:
- EP-A- 276 634
- PATENT ABSTRACTS OF JAPAN Vol. 9, No. 179 (M-399)(1902) 24 July 1985 & JP-A-6049885 (MATSUSHITA DENKI SANGYO)

## Beschreibung

Die Erfindung betrifft eine Stanz-Rillplatte, die durch eine dünne ebene Grundplatte gebildet ist, in der Rillen vorgesehen sind.

Bekannte solche unter dem Warenzeichen "RILLMA" vertriebene Stanz-Rillplatten haben eine Dicke zwischen etwa 1,5 und 3 mm. Sie bestehen aus Kunststoff oder Metall, insbesondere Nylon. Die Rillen zum späteren Stanzen und Prägen von Papier oder Kartonzuschnitten werden durch Fräsen, Erodieren, Ätzen oder Anlösen hergestellt. Dieses Fräsen, Ätzen und/oder Anlösen ist relativ zeitaufwendig und es sind auch die erforderlichen Vorrichtungen relativ aufwendig. Insbesondere treten durch die erforderlichen chemischen Mittel Umweltprobleme auf.

Bei der Verwendung von Kunststoff treten bei Temperaturveränderungen unerwünschte Maßänderungen auf. Weiter verformt sich der Kunststoff bei zu hohen auftretenden Kräften. An besonders beanspruchten Stellen tritt auch Verschleiß auf, so daß die Standzeit Wünsche offen läßt.

Eine massive Stanz-Rillplatte ist aus der EP 0 105 748 A1 bekannt. Aus der JP-A-60 49 885 ist es bekannt, bei Stanzplatten durchgehende, durch Brücken unterbrochene Schlitze vorzusehen.

In Vermeidung der geschilderten Nachteile liegt der vorliegenden Erfindung die **Aufgabe** zugrunde eine Stanz-Rillplatte der eingangs genannten Art so auszubilden, daß sie sich einfach maßgenau herstellen läßt, und auch bei hoher Beanspruchung ihre Formgenauigkeit bei hoher Standzeit beibehält.

Zur Lösung dieser Aufgabe sieht die Erfindung vor, daß die ebene Grundplatte eine Stahlplatte mit einer Dicke zwischen etwa 0,5 und 1,5 mm ist und daß als Rillen ganz durch die Stahlplatte hindurchgehende Schlitze 2 dienen, daß die einzelnen Schlitze 2 durch schmale Brücken 3 unterbrochen bzw. voneinander getrennt sind, und daß die Schlitze 2 mittels eines Lasers hergestellt sind.

Durch die Laserbearbeitung erfolgt, bei der Verwendung von normalen Stahlplatten, eine gewisse Oberflächenverhärtung, so daß selbst bei ungehärteten Stahlplatten nur ein geringer Verschleiß auftritt und eine lange Standzeit mit besonders geringem Aufwand erreicht werden kann.

Durch die Laserbearbeitung der Grundplatte kann NC-gesteuert eine sehr exakte und beliebig oft reproduzierbare Plattenbearbeitung erreicht werden, bei der insbesondere keine Umweltprobleme auftreten. Besonders vorteilhaft kann die ebene Platte aus bereits gehärtetem etwa 0,5 bis 1,5 mm dickem Stahlblech bestehen, da bei der Bearbeitung durch Laser der Bearbeitungsaufwand gehärtet - ungehärtet praktisch keinen Einfluß auf die Bearbeitungszeit hat, aber eine erforderlich Härtung erst nach der Bearbeitung wesentliche Probleme bei der Maßhaltigkeit aufwirft, da beim Härten ein Verziehen kaum vollständig vermieden werden kann. Herstellungszeit, Herstellungsqualität und Maßhaltigkeit sind gegenüber den seither bekannten Stanz-Rillplatten unvergleichlich besser. Auch ist der Materialverbrauch durch die verwendeten relativ dünnen Platten wesentlich geringer. Durch die Planheit der Stanz-Rillplatte entsteht im zu stanzenden und ggf. zu rillenden Bogen kein Zug, so daß eine optimale Bearbeitungsqualität erreicht werden kann. Der Maschinenlauf ist besonders ruhig und es kann daher mit einer höheren Bearbeitungsgeschwindigkeit gearbeitet werden.

Besonders vorteilhaft kann als Plattenwerkstoff Edelstahl verwendet werden, der bei der Laserbearbeitung relativ wenig Schwierigkeiten bereitet, der aber den Vorteil hat, daß bei auftretender Feuchtigkeit keine Korrision, insbesondere keine Rostbildung auftritt. Die Stanz-Rillplatten können so auch ohne besondere Konservierungsmaßnahmen über lange Zeit aufbewahrt und ohne besondere Reinigungsarbeiten wieder im Herstellungprozeß eingesetzt werden.

Besonders vorteilhaft kann die Oberflächenhärte zwischen etwa 42 - 56 HRC liegen.

Um eine ausreichende Festigkeit der flachen Grundplatte zu gewährleisten, können die einzelnen Schlitze durch schmale Brücken unterbrochen bzw. voneinander getrennt sein.

Die Beanspruchung dieser Brücken kann dadurch minimiert werden, daß diese symmetrisch verteilt vorgesehen sind. Der Stanz- bzw. Prägedruck verteilt sich dann ebenfalls symmetrisch und hält die Brücken dadurch praktisch spannungsfrei.

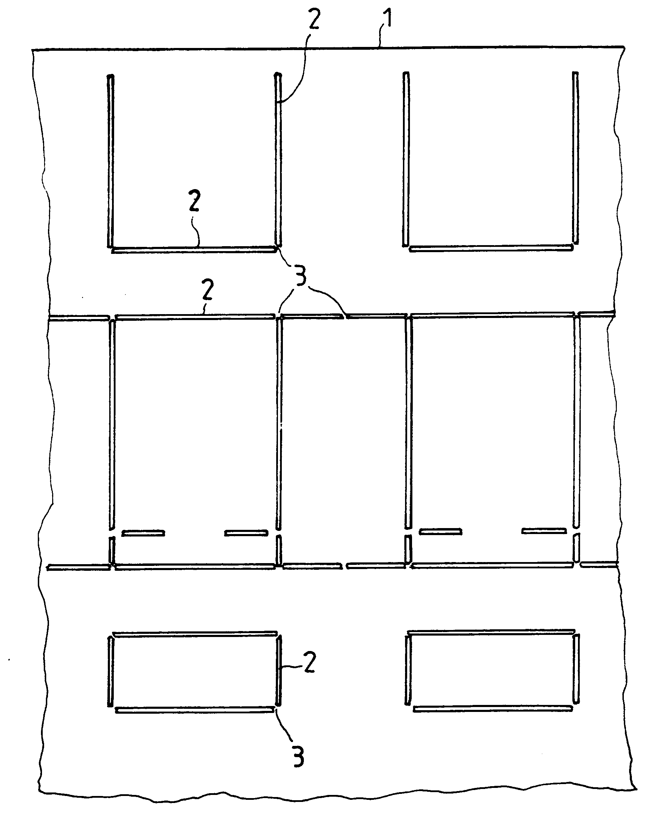

Die Erfindung ist nachfolgend anhand der beiliegenden Zeichnung, die eine Draufsicht auf ein Ausführungsbeispiel einer Stanz-Rillplatte darstellt, näher erläutert.

Die dargestellte Stanz-Rillplatte ist eine ebene Edelstahlplatte mit einer Dicke zwischen etwa 0,5 und 1,5 mm. Zur Herstellung von Kartonzuschnitten bestimmter Abmessungen sind in der Grundplatte 1 mit einem Laserstrahl Schlitze 2 eingebracht, die ganz durch die Grundplatte 1 hindurchgehen.

Zur Erhaltung der Stabilität der Grundplatte 1 sind die Schlitze 2 durch Brücken 3 unterbrochen. Diese Brücken 3 sind insbesondere symmetrisch angeordnet, so daß bei einem Prägen oder Stanzen auf der Stanz-Rillplatte stets eine symmetrisch Beanspruchung erreicht wird und damit die Brücken 3 praktisch beanspruchungsfrei bleiben, so daß sie ohne Bruchgefahr relativ schmal ausgebildet werden können.

Die Oberfläche der Stanz-Rillplatte ist vorteilhaft gehärtet, wobei zur Herstellung bereits oberflächengehärtete Bleche verwendet werden können, die durch die Lasertechnik ohne Schwierigkeiten bearbeitbar sind und durch die die erforderliche Formstabilität und Standzeit erreicht wird.

## Patentansprüche

1. Stanz-Rillplatte, die durch eine ebene dünne Grundplatte (1) gebildet ist, in der Rillen vorgesehen sind, **dadurch** **gekennzeichnet,** daß die ebene Grundplatte (1) eine Stahlplatte mit einer Dicke zwischen etwa 0,5 und 1,5 mm ist, und daß als Rillen (2) ganz durch die Stahlplatte hindurchgehende Schlitze (2) dienen, daß die einzelnen Schlitze (2) durch schmale Brücken (3) unterbrochen bzw. voneinander getrennt sind, und daß die Schlitze (2) mittels eines Lasers hergestellt sind.

2. Stanz-Rillplatte nach Anspruch 1, dadurch gekennzeichnet, daß die ebene Stahlplatte aus gehärtetem oder oberflächengehärtetem Blech besteht.

3. Stanz-Rillplatte nach Anspruch 1 oder 2, dadurch gekennzeichnet, daß die Oberflächenhärte zwischen 42-56 HRC liegt.

4. Stanz-Rillplatte nach Anspruch 1, dadurch gekennzeichnet, daß die schmalen Brücken (3) symmetrisch verteilt zu den Schlitzen (2) vorgesehen sind.

5. Stanz-Rillplatte nach einem der Ansprüche 1 bis 4, dadurch gekennzeichnet, daß die Stahlplatte aus Edelstahl besteht.

## Claims

1. A grooved stamping plate which is formed by a flat thin baseplate (1) in which grooves are provided, characterised in that the flat baseplate (1) is a steel plate of a thickness of between about 0.5 and 1.5 mm and that slits (2) which pass entirely through the steel plate serve as the grooves (2), that the individual slits (2) are interrupted or separated from each other by narrow bridges (3) and that the slits (2) are produced by means of a laser.

2. A grooved stamping plate according to claim 1 characterised in that the flat steel plate comprises hardened or surface-hardened sheet.

3. A grooved stamping plate according to claim 1 or claim 2 characterised in that the surface hardness is between 42-56 HRC.

4. A grooved stamping plate according to claim 1 characterised in that the narrow bridges (3) are disposed in symmetrically distributed relationship with the slits (2).

5. A grooved stamping plate according to one of claims 1 to 4 characterised in that the steel plate comprises high-quality steel.

## Revendications

1. Plaque à estamper, à rainures, qui est constituée par une plaque de base (1) plane et mince dans laquelle sont prévues des rainures, caractérisée en ce que la plaque de base (1) plane est une plaque d'acier ayant une épaisseur comprise environ entre 0,5 et 1,5 mm, en ce qu'il est prévu comme rainures (2) des fentes (2) traversant totalement la plaque d'acier, en ce que les différentes fentes (2) sont interrompues et séparées les unes des autres par d'étroites barrettes de liaison (3) et en ce que les fentes (2) sont réalisées au moyen d'un laser.

2. Plaque à estamper, à rainures, selon la revendication 1, caractérisée en ce que la plaque d'acier plane est en tôle ayant subi une trempe totale ou superficielle.

3. Plaque à estamper, à rainures, selon la revendication 1 ou 2, caractérisée en ce que la dureté superficielle est comprise entre 42 et 56 HRC.

4. Plaque à estamper, à rainures, selon la revendication 1, caractérisée en ce que les barrettes (3) étroites sont réparties symétriquement par rapport aux fentes (2).

5. Plaque à estamper, à rainures, selon une quelconque des revendications 1 à 4, caractérisée en ce que la plaque d'acier est en acier spécial.
